(19) Europäisches Patentamt
European Patent Office
Office européen des brevets

(11) **EP 3 018 782 B1**

(12) **EUROPEAN PATENT SPECIFICATION**

(45) Date of publication and mention
of the grant of the patent:
**19.02.2020 Bulletin 2020/08**

(51) Int Cl.:
*H02J 13/00* *(2006.01)*      *H02H 7/26* *(2006.01)*
*H02H 3/00* *(2006.01)*

(21) Application number: **13888570.2**

(22) Date of filing: **04.07.2013**

(86) International application number:
**PCT/JP2013/068364**

(87) International publication number:
**WO 2015/001641 (08.01.2015 Gazette 2015/01)**

(54) **PROTECTION RELAY DEVICE**

SCHUTZRELAISVORRICHTUNG

DISPOSITIF DE RELAIS DE PROTECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.05.2016 Bulletin 2016/19**

(73) Proprietor: **Mitsubishi Electric Corporation
Tokyo 100-8310 (JP)**

(72) Inventor: **ADACHI, Keigo
Tokyo 100-8310 (JP)**

(74) Representative: **Mewburn Ellis LLP
City Tower
40 Basinghall Street
London EC2V 5DE (GB)**

(56) References cited:
**EP-A1- 2 503 667    WO-A1-2010/118550
JP-A- H05 188 105   JP-A- 2004 282 856
JP-A- 2006 300 963   JP-A- 2013 038 841
US-A1- 2010 153 036**

**Description**

TECHNICAL FIELD

The present invention relates to a protection relay device placed for the purpose of protecting an electric power system.

BACKGROUND ART

A protection relay device has been used to collect information such as current and voltage (hereinafter referred to as "system electricity amount") from an electric power system, and to detect a fault when the fault occurs in the electric power system or an electric power facility and separate the fault from the electric power system.

In the facilities related to the electric power system, networking is in progress with the recent advances in information and communication technology and digital control technology. As one example of such networking, a distributed protection relay device has been proposed and put to practical use. The distributed protection relay device is implemented by functionally separating a conventional protection relay device, and includes one or a plurality of merging units for collecting a system electricity amount from an electric power system, and one or a plurality of intelligent electric devices for protecting, controlling and monitoring the electric power system based on the information from these merging units.

For example, in a transforming equipment protective control system disclosed in Japanese Patent Laying-Open No. 2002-315233 (PTD 1), an alternating current flowing through a transforming equipment body formed by a bus, a switch and a power transmission line as well as an AC voltage applied to the transforming equipment body are extracted by an instrument transformer and A/D conversion (analog/digital conversion) is performed on this extracted analog electricity amount, and thereafter, the data is transmitted as digital data to a process bus via a merging unit. Then, this digital data is taken into a protective control unit connected to the process bus and is used in computations for monitoring, control and protection of the transforming equipment body. A control command from the protective control unit, the monitoring information from the transforming equipment body, and the like are transmitted and received by an equipment control unit via the process bus, and this equipment control unit outputs an interruption command and the like to the switch.

WO 2010/118550 A1 (PTD 2) describes an intelligent process interface and a substation automation system including the intelligent process interface. The intelligent process interface is configured to issue a command signal for operating a switch device and configured to generate and transmit a network message comprising synchronized and merged signals over a communication network. The signals are measured by an instrument transformer and/or a sensor connected to the intelligent process interface via an input interface. The intelligent process interface is configured to generate the command signal based on one of the signals or based on a network message received from an intelligent electronic device.

US 2010/153036 A1 (PTD 3) describes an intelligent electronic device (IED) integrating a power metering unit and a merging unit that combines signals from both analog transformers and digital transformers into a set of merged digital samples. Analog current/voltage signals from analog CTs/PTs are received at the IED's analog inputs and converted to digitized samples. Digital current/voltage samples from digital CTs/PTs are received via point-to-point connections at digital inputs of the IED. A tagging unit applies metadata tags to the digitized and digital samples.

EP 2503667 A1 (PTD 4) describes a merging unit, particularly for substation automation, comprising at least one input interface for receiving input data characterizing at least one voltage and/or current related to a component of a power system, wherein said merging unit further comprises a control unit that is configured to determine phasor measurement information depending on said input data.

JP H05 188105 A (PTD 5) describes a system in which a digital signal read from a digital source or the like is input from an input terminal. A response signal from an object to be measured to a signal wherein the digital signal has been converted into an analog signal is input from an input terminal. The analog signal input from the input terminal is synchronized with the digital signal input from the input terminal and converted into a digital signal by an A/D-converter. The time shift between the converted signal and the digital signal input from the input terminal is corrected with the digital signal used as a reference.

CITATION LIST

PATENT DOCUMENT

PTD 1: Japanese Patent Laying-Open No. 2002-315233

PTD 2: WO 2010/118550 A1
PTD 3: US 2010/153036 A1
PTD 4: EP 2503667 A1
PTD 5: JP H05 188105 A

## SUMMARY OF INVENTION

### TECHNICAL PROBLEM

The distributed protection relay device as described above achieves reduction in size of the device because a plurality of circuits forming the protection relay device are digitized and the plurality of circuits are coupled by the process bus. In addition, effective utilization of the information is also possible, and thus, the maintenance/operability as well as cost efficiency can be enhanced.

On the other hand, the intelligent electric device takes in the digital data corresponding to the system electricity amount from each of the plurality of merging units coupled by the process bus, and thus, the plurality of merging units need to be matched with each other in terms of a phase of the digital data. In order to achieve this, the plurality of merging units need to be synchronized in terms of a timing of A/D conversion.

However, the merging units include the one that is configured to convert an analog electricity amount collected from an instrument transformer into digital data by using a built-in A/D converter and output the digital data to the process bus, and the one that is configured to collect digital data generated by an A/D converter provided within an instrument transformer and outputs the digital data to the process bus. In the latter configuration, the merging unit controls the timing of A/D conversion in the instrument transformer. Therefore, when the two merging units configured as described above are used in one protection relay device, there arises a problem that a difference in timing of A/D conversion occurs between the merging units. As a result, a phase of the digital data differs between the plurality of merging units, and thus, the intelligent electric device does not function properly.

The present invention has been made to solve the aforementioned problem, and an object of the present invention is to provide a distributed protection relay device that allows a plurality of merging units to be matched with each other in terms of a phase of digital data.

### SOLUTION TO PROBLEM

According to an aspect of the present invention, a protection relay device according to claim 1 is provided. Further aspects of the invention are set out in the remaining claims.

### ADVANTAGEOUS EFFECTS OF INVENTION

According to the present invention, in the distributed protection relay device, the plurality of merging units can be matched with each other in terms of the phase of the digital data.

### BRIEF DESCRIPTION OF DRAWINGS

Fig. 1 is an overall configuration diagram of a protection relay device according to a first embodiment of the present invention.
Fig. 2 is a waveform diagram showing a relationship between a timing of A/D conversion in an AMU and a timing of A/D conversion in an NMU.
Fig. 3 is a functional block diagram of an IED in the protection relay device according to the first embodiment.
Fig. 4 is a diagram describing phase correction of AI data in a phase correcting unit of the IED.
Fig. 5 is a vector diagram showing AMU data subjected to phase correction.
Fig. 6 is a functional block diagram of an AMU in a protection relay device according to a second embodiment of the present invention.
Fig. 7 is a functional block diagram of an ECT/EVT and an NMU in the protection relay device according to the second embodiment of the present invention.
Fig. 8 is a flowchart showing a process procedure for each of the AMU, the NMU and the ECT/EVT.
Fig. 9 is an overall configuration diagram of a protection relay device according to a third embodiment of the present invention.
Fig. 10 is a functional block diagram of an IED in a protection relay device according to a fourth embodiment of the present invention.

Fig. 11 is a functional block diagram of an IED and an AMU in a protection relay device according to a fifth embodiment of the present invention.

DESCRIPTION OF EMBODIMENTS

Embodiments of the present invention will be described in detail with reference to the drawings, in which the same or corresponding portions are denoted by the same reference characters and description thereof will not be repeated.

First Embodiment

(Overall Configuration of Protection Relay Device)

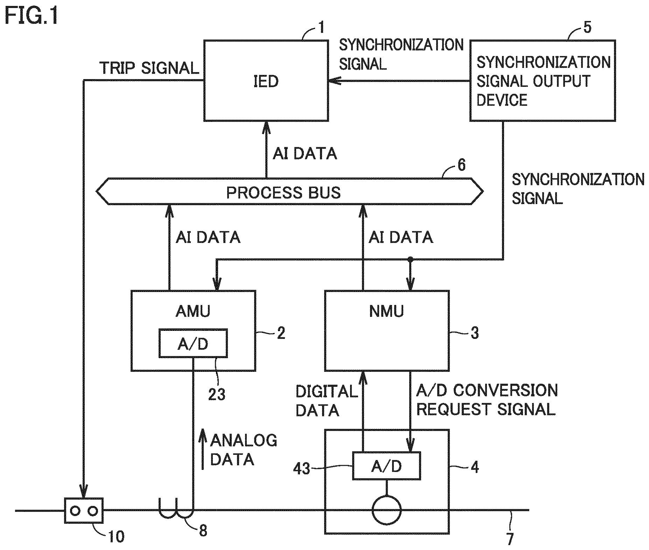

Fig. 1 is an overall configuration diagram of a protection relay device according to a first embodiment of the present invention.

Referring to Fig. 1, the protection relay device according to the first embodiment of the present invention is placed near a power transmission line 7 that forms an electric power system, and collects information such as current and voltage (system electricity amount) from the electric power system. Based on the collected system electricity amount, the protection relay device performs processing such as protection, control and monitoring of the electric power system.

Specifically, the protection relay device includes a plurality of merging units (hereinafter also referred to as "MU") 2 and 3 for collecting the system electricity amount from the electric power system, and an intelligent electric device (hereinafter also referred to as "IED") 1 for protecting, controlling and monitoring the electric power system. Data can be mutually communicated between the plurality of MUs 2 and 3 and IED 1 via a process bus 6. Namely, the protection relay device according to the first embodiment forms a process bus associated protection relay device in which the function of the protection relay device is mainly divided into two functions by using process bus 6.

In the process bus associated protection relay device, the plurality of MUs 2 and 3 need to collect the system electricity amount and transmit the system electricity amount to IED 1 in a timing-synchronized manner, in order to immediately interrupt a place of occurrence of a fault when the fault occurs in the electric power system. In order to synchronize the plurality of MUs 2 and 3 and IED 1 in terms of time, the protection relay device further includes a synchronization signal output device 5. Synchronization signal output device 5 grasps the time with a high degree of accuracy by using, for example, GPS (global positioning system), and outputs a synchronization signal indicating the time to MUs 2 and 3 and IED 1.

Each of the plurality of MUs 2 and 3 sends the collected system electricity amount to IED 1. Based on the system electricity amount transmitted from each MU, IED 1 performs processing such as protection, control and monitoring of the electric power system. In a general protection relay device, a plurality of IEDs 1 are arranged depending on applications (e.g., for each target to be protected or target to be controlled). Such IEDs arranged depending on applications include, for example, a protection IED that implements the protection function and a control IED that implements the control function.

As one example of the protection function, IED 1 determines, at every prescribed cycle, whether or not a predetermined relay computation logic is satisfied. When the relay computation logic is satisfied, IED 1 outputs a trip signal to a corresponding breaker. This trip signal may be transmitted via process bus 6. As one example of the control function, IED 1 can also output a command for throwing/opening of a switch in the electric power system, and the like.

Furthermore, as one example of the monitoring function, when some kind of failure occurs in the electric power system, IED 1 can perform waveform recording (logging) of the information of the electric power system before and after the occurrence, and can also output the information of the electric power system in real time. For example, IED 1 is connected to a substation automation system (SAS) and a remote monitoring control device by a station bus, although not shown. IED 1 can output the information of the electric power system to the substation automation system and the remote monitoring control device. An arbitrary processing other than the aforementioned processing can also be implemented in IED 1. For example, the function corresponding to the substation automation system may be implemented by using IED 1.

In Fig. 1, power transmission line 7 is provided with a breaker 10 and is also provided with instrument transformers 4 and 8. The instrument transformer is a generic name for a current transformer (CT) and a voltage transformer (VT). Instrument transformers 4 and 8 measure the information of a current (current waveform) flowing through power transmission line 7, and the information of a voltage (voltage waveform) generated at power transmission line 7. The information of the current and voltage (system electricity amount) measured by instrument transformers 4 and 8 is input to corresponding MUs 2 and 3. Namely, MUs 2 and 3 collect the information of the current flowing through power transmission line 7 and the voltage generated at power transmission line 7 (system electricity amount).

Here, the instrument transformers include an instrument transformer configured to output analog data indicating the information of the measured current and voltage, and an instrument transformer configured to convert the analog data into digital data by using a built-in A/D converter and output the digital data. In the following description, in order to distinguish between these instrument transformers, instrument transformer 8 that outputs the analog data is also denoted as "CT/VT", and instrument transformer 4 that converts the analog data into the digital data by using a built-in A/D converter 43 and outputs the digital data is also denoted as "ECT/EVT".

Furthermore, the MUs include the one that collects analog data indicating the system electricity amount, and the one that collects digital data indicating the system electricity amount. In the following description, the MU that collects the analog data is also denoted as "AMU (Analog Merging Unit)", and the MU that collects the digital data is also denoted as "NMU (Numerical Merging Unit)". Either the AMU or the NMU is used depending on the configuration of the corresponding instrument transformer. In Fig. 1, the analog data output from CT/VT 8 is input to AMU 2. On the other hand, the digital data output from ECT/EVT 4 is input to NMU 3.

AMU 2 collects the analog data which is a measurement value of CT/VT 8, and converts this collected analog data into digital data by using a built-in A/D converter 23. Specifically, A/D converter 23 samples and quantizes the analog data at every predetermined sampling cycle. A timing of sampling in A/D converter 23 is controlled by a synchronization signal from synchronization signal output device 5. AMU 2 further performs processing such as gain adjustment and phase correction on the digital data output from A/D converter 23, thereby generating AI (Analog Input) data. AMU 2 transmits the generated AI data to IED 1 via process bus 6. Serial data in which the measurement values are arranged in chronological order at every sampling cycle is typically used as the AI data transmitted to IED 1. Namely, AMU 2 uses the measurement value (analog data) from CT/VT 8 as an input, and outputs the data as the AI data which is the serial data via process bus 6 after A/D conversion. Process bus 6 may be configured to transmit the AI data in the form of an electric signal, or may be configured to transmit the AI data in the form of an optical signal by using an optical fiber.

NMU 3 collects the digital data output from ECT/EVT 4, and performs processing such as gain adjustment and phase correction on the collected digital data, thereby generating AI data. NMU 3 transmits the generated AI data to IED 1 via process bus 6. Namely, NMU 3 uses the measurement value (digital data) from ECT/EVT 4 as an input, and outputs the data as the AI data which is the serial data via process bus 6.

IED 1 receives the AI data transmitted from AMU 2 via process bus 6 and the AI data transmitted from NMU 3 via process bus 6. Based on the AI data transmitted from AMU 2 and NMU 3, IED 1 determines, at every prescribed cycle, whether or not the predetermined relay computation logic is satisfied. When the relay computation logic is satisfied, IED 1 outputs the trip signal to corresponding breaker 10.

Here, in ECT/EVT 4, a timing of sampling (timing of A/D conversion) in A/D converter 43 is controlled by an A/D conversion request signal from NMU 3. Specifically, when receiving the synchronization signal from synchronization signal output device 5, NMU 3 uses this synchronization signal to generate the A/D conversion request signal that dictates start of A/D conversion. NMU 3 transmits the generated A/D conversion request signal to A/D converter 43. A/D converter 43 performs A/D conversion in synchronization with the A/D conversion request signal from NMU 3, and outputs the digital data to NMU 3.

Namely, the timing of A/D conversion in A/D converter 43 provided within ECT/EVT 4 is controlled by the A/D conversion request signal generated by NMU 3 in accordance with the synchronization signal from synchronization signal output device 5. In contrast, the timing of A/D conversion in A/D converter 23 provided within AMU 2 is controlled by the synchronization signal from synchronization signal output device 5.

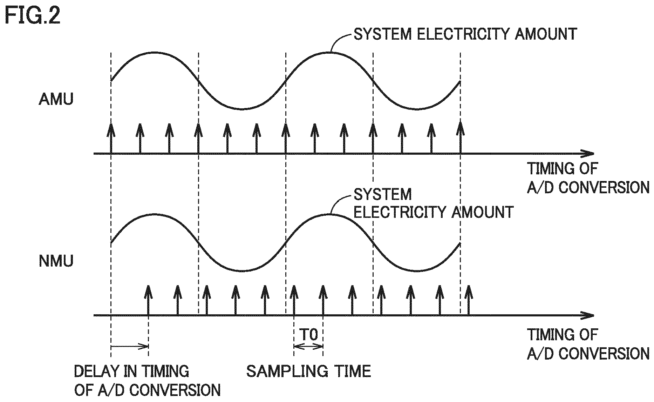

Fig. 2 is a waveform diagram showing a relationship between the timing of A/D conversion in AMU 2 and the timing of A/D conversion in NMU 3. In Fig. 2, the timing of A/D conversion (timing of sampling) in each MU is represented by an arrow. In addition, the sampling time in each MU is represented by T0.

Referring to Fig. 2, the timing of A/D conversion in NMU 3 substantially corresponds to the timing of A/D conversion in A/D converter 43 provided within ECT/EVT 4. As described above, the timing of A/D conversion in NMU 3 is controlled by the A/D conversion request signal output from NMU 3 in response to the synchronization signal from synchronization signal output device 5. In contrast, the timing of A/D conversion in AMU 2 is controlled by the synchronization signal from synchronization signal output device 5. Therefore, as shown in Fig. 2, the timing of A/D conversion in NMU 3 is delayed with respect to the timing of A/D conversion in AMU 2, and thus, a difference in timing of collecting the system electricity amount occurs between AMU 2 and NMU 3.

Thus, in the protection relay device according to the first embodiment, IED 1 is configured to have a correction function for compensating for the difference in timing of A/D conversion between AMU 2 and NMU 3, in addition to the normal protection, control and monitoring functions.

(Configuration of IED)

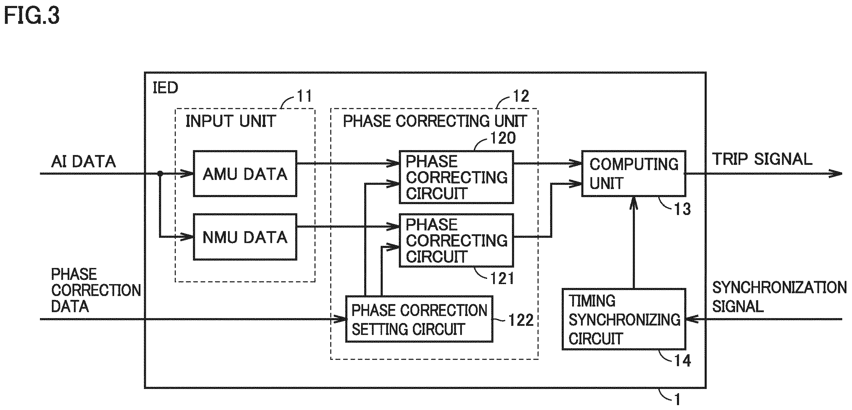

IED 1 will be further described with reference to Fig. 3. Fig. 3 is a functional block diagram of IED 1 in the protection relay device according to the first embodiment. Each functional block shown in Fig. 3 is implemented by IED 1 performing software processing in accordance with a preset program. Alternatively, it is also possible to provide, within IED 1, a circuit (hardware) having a function corresponding to each functional block.

Referring to Fig. 3, IED 1 includes an input unit 11, a phase correcting unit 12, a computing unit 13, and a timing synchronizing circuit 14.

Input unit 11 is an interface for connecting to process bus 6, and exchanges necessary data with MUs 2 and 3 and the other IED. When accepting the AI data via process bus 6, input unit 11 divides the AI data into AMU data which is the AI data from AMU 2 and NMU data which is the AI data from NMU 3.

Phase correcting unit 12 corrects a phase of the AI data (the AMU data and the NMU data) by using phase correction data input from outside the protection relay device. Specifically, phase correcting unit 12 includes phase correcting circuits 120 and 121, and a phase correction setting circuit 122.

Based on the phase correction data input from outside, phase correction setting circuit 122 sets amounts of correction of the phases of the AMU data and the NMU data such that the phase of the AMU data matches with the phase of the NMU data. The phase correction data refers to data indicating an amount of phase shifting between the AMU data and the NMU data which occurs due to the difference in timing of A/D conversion between AMU 2 and NMU 3. This phase correction data is set depending on the preliminarily-measured magnitude of the difference in timing of A/D conversion (hereinafter also referred to as "amount of delay"), and is externally input to IED 1.

Phase correcting circuit 120 corrects the phase of AMU data 110 based on the amount of phase correction set by phase correction setting circuit 122. Phase correcting circuit 121 corrects the phase of NMU data 111 based on the amount of phase correction set by phase correction setting circuit 122.

Computing unit 13 performs computation processing on the AMU data and NMU data subjected to correction. A timing of computation in computing unit 13 is controlled by timing synchronizing circuit 14. Specifically, timing synchronizing circuit 14 controls the timing of computation in computing unit 13 in accordance with the synchronization signal from synchronization signal output device 5. Computing unit 13 determines, at every prescribed cycle, whether or not the predetermined relay computation logic is satisfied. When the relay computation logic is satisfied, computing unit 13 outputs the trip signal to corresponding breaker 10 (Fig. 1).

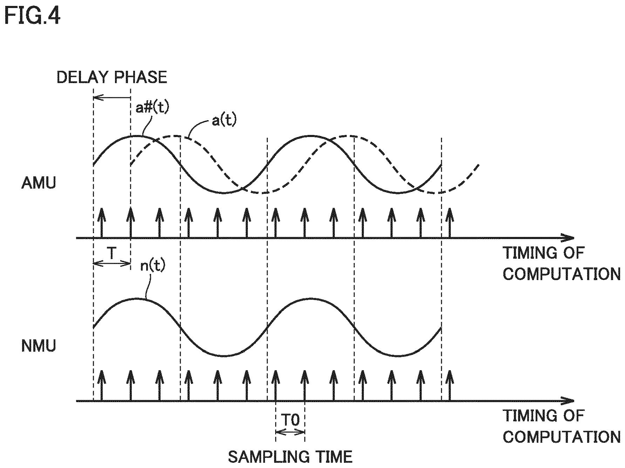

Phase correction of the AI data in phase correcting unit 12 will be described below with reference to Fig. 4.

As described above, the AI data (the AMU data and the NMU data) from input unit 11 is input to phase correcting unit 12. In Fig. 4, the AMU data input from input unit 11 is represented by a waveform a(t) (a dotted waveform in Fig. 4), and the NMU data input from input unit 11 is represented by a waveform n(t) (a solid waveform in Fig. 4). Furthermore, in Fig. 4, the timing of computation in computing unit 13 is represented by an arrow. The timing of computation in computing unit 13 is controlled by timing synchronizing circuit 14 that receives the synchronization signal from synchronization signal output device 5.

As shown in Fig. 2, the timing of A/D conversion in NMU 3 is delayed with respect to the timing of A/D conversion in AMU 2. Due to this delay in timing of A/D conversion, waveform n(t) indicating the NMU data is delayed in phase as compared with waveform a(t) indicating the AMU data.

When the protection relay device is configured by using both AMU 2 and NMU 3 as described above, the phase of the AI data (AMU data) output from AMU 2 is different from the phase of the AI data (NMU data) output from NMU 3. Therefore, the computation processing at each computation timing cannot be performed accurately, and thus, there is a possibility of failing to immediately open breaker 10 when a system fault occurs. Alternatively, there is a possibility of opening breaker 10 by mistake although the electric power system is normal.

Thus, phase correcting unit 12 delays the phase of waveform a(t) indicating the AMU data, thereby matching the phase of the AMU data with the phase of the NMU data at each computation timing. In Fig. 4, the AMU data subjected to phase correction is represented by a waveform a#(t) (a solid waveform in Fig. 4). As a result, at each computation timing, computing unit 13 can use the AI data collected at the same timing.

Specifically, phase correction setting circuit 122 sets an amount of correction T of the phase of the AMU data based on the phase correction data. On the other hand, phase correction setting circuit 122 sets an amount of correction of the phase of the NMU data at zero. Phase correcting circuit 120 delays the phase of the AMU data in accordance with amount of phase correction T. On the other hand, phase correcting circuit 121 does not correct the phase of the NMU data and keeps the phase of the NMU data unchanged.

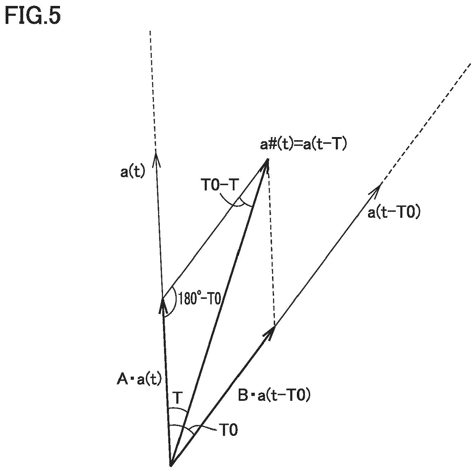

Fig. 5 shows vector representation of AMU data a(t) at a certain sampling timing t and AMU data a(t-T0) at a previous sampling timing (t-T0). A phase of AMU data a#(t) subjected to phase correction is delayed by amount of correction T with respect to a phase of AMU data a(t). Namely, AMU data a#(t) subjected to phase correction corresponds to a(t-T).

In the vector diagram of Fig. 5, AMU data a#(t) subjected to phase correction is assumed to be a vector synthesis of data obtained by multiplying AMU data a(t) at sampling timing t by a prescribed coefficient (the coefficient is assumed as "A") and data obtained by multiplying AMU data a(t-T0) at previous sampling timing (t-T0) by a prescribed coefficient (the coefficient is assumed as "B"). AMU data a#(t) subjected to phase correction is expressed by the following equation (1):

$$a\#(t) = a(t-T) = A \bullet a(t) + B \bullet a(t-T0) \qquad \cdots (1).$$

Here, in accordance with the sine theorem, the relationship of the following equation (2) is satisfied among the three vectors, $A \bullet a(t)$, $B \bullet a(t-T0)$ and $a\#(t)$:

$$A \bullet a(t)/\sin(T0-T)$$

$$= B \bullet a(t-T0)/\sin(T) = a\#(t)/\sin(180°-T) \qquad \cdots (2).$$

By arranging the aforementioned equations (1) and (2), coefficients A and B are expressed by the following equations (3) and (4):

$$A = \sin(T0-T)/\sin(180°-T) \qquad \cdots (3)$$

$$B = \sin(T)/\sin(180°-T) \qquad \cdots (4).$$

Namely, by adding AI data a(t) at sampling timing t and AI data a(t-T0) at previous sampling timing (t-T0) by using coefficients A and B expressed by the aforementioned equations (3) and (4), AMU data a#(t) subjected to phase correction can be derived. The phase of the AMU data is delayed as described above, and thereby, the phase of the AMU data is matched with the phase of the NMU data.

As described above, according to the protection relay device of the first embodiment of the present invention, the IED that receives the AI data from the AMU and the NMU delays the phase of the AMU data, and thereby, the IED can substantially compensate for the difference in timing of A/D conversion between the AMU and the NMU. As a result, the timing of collecting the system electricity amount in the AMU can be matched with the timing of collecting the system electricity amount in the NMU, and thus, the protection relay device can accurately perform processing such as protection, control and monitoring of the electric power system.

Second Embodiment

In the protection relay device according to the aforementioned first embodiment, description has been given to the configuration in which the IED has the correction function for compensating for the difference in timing of A/D conversion between the AMU and the NMU. On the other hand, in the process bus associated protection relay device, it is also possible that the MU, instead of the IED, has this correction function. In a second embodiment, description will be given to a configuration in which the MU has the correction function for compensating for the difference in timing of A/D conversion.

(Configuration of AMU)

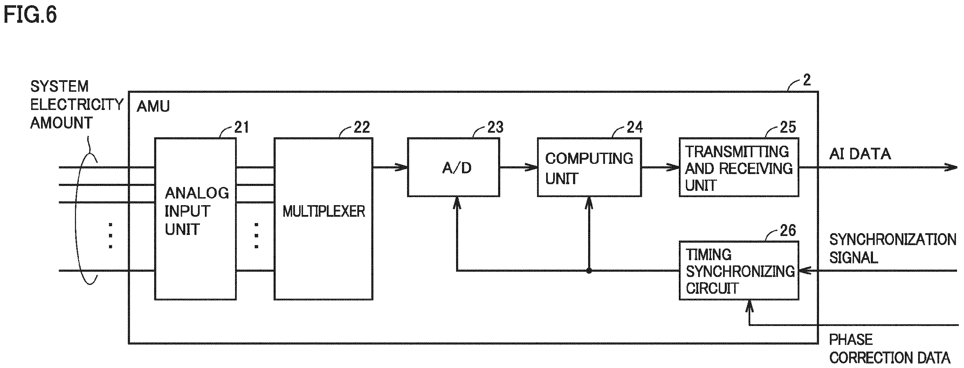

Fig. 6 is a functional block diagram of AMU 2 in a protection relay device according to the second embodiment of the present invention. Each functional block shown in Fig. 6 is implemented by AMU 2 performing software processing in accordance with a preset program. Alternatively, it is also possible to provide, within AMU 2, a circuit (hardware) having a function corresponding to each functional block.

Referring to Fig. 6, AMU 2 includes an analog input unit 21, a multiplexer 22, A/D converter 23, a computing unit 24, a transmitting and receiving unit 25, and a timing synchronizing circuit 26.

Analog input unit 21 converts a system electricity amount (analog data) from CT/VT 8 into a level within a prescribed range that is easy for handling by an electronic circuit, and outputs the system electricity amount. Specifically, analog input unit 21 converts a current signal from the CT into a current signal within a prescribed range, and converts a voltage signal from the VT into a voltage signal within a prescribed range. Furthermore, by using a not-shown analog filter, analog input unit 21 removes an unnecessary frequency component (typically, a harmonic component) from the converted current signal and voltage signal.

In accordance with a prescribed order, multiplexer 22 sequentially selects one analog signal from a plurality of analog signals output from the aforementioned analog filter, and outputs the analog signal to A/D converter 23. With such a configuration, a plurality of digital signals corresponding to the plurality of analog signals, respectively, can be obtained by using single A/D converter 23.

Computing unit 24 performs computation processing on the digital signal from A/D converter 23. Specifically, computing unit 24 performs processing such as gain adjustment and phase correction on the digital signal output from A/D converter 23, thereby generating digital data (AI data) that conforms to a protocol defined as process bus 6. As described above, serial data in which the measurement values are arranged in chronological order at every sampling cycle is used as the AI data.

Timing synchronizing circuit 26 controls a timing of sampling (timing of A/D conversion) in A/D converter 23 and a timing of computation in computing unit 24 in accordance with the synchronization signal from synchronization signal output device 5 (Fig. 1). In accordance with a method described below, timing synchronizing circuit 26 further corrects the timing of A/D conversion in A/D converter 23 by using phase correction data input from outside the protection relay device.

Transmitting and receiving unit 25 transmits the AI data generated by computing unit 24 to IED 1 via process bus 6 (Fig. 1). Furthermore, when receiving a trip signal from IED 1 via process bus 6, transmitting and receiving unit 25 notifies computing unit 24 of the reception of the trip signal.

When being notified of the reception of the trip signal from IED 1, computing unit 24 stores the digital data as log data over a prescribed time period based on the timing of notification. This stored log data is transmitted to an analyzer connected to a not-shown substation automation system. The analyzer collects the recorded information from IED 1 as well, together with the log data, and analyzes a cause for occurrence of a system fault based on these information.

(Configurations of ECT/EVT 4 and NMU 3)

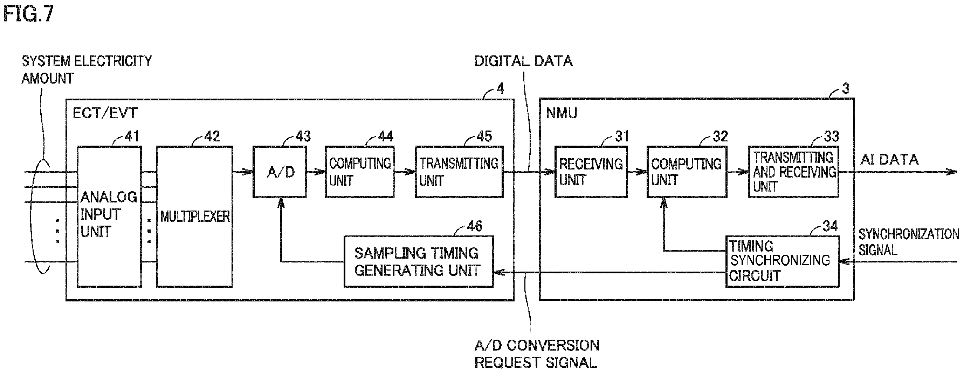

Fig. 7 is a functional block diagram of ECT/EVT 4 and NMU 3 in the protection relay device according to the second embodiment of the present invention. Each functional block shown in Fig. 7 is implemented by ECT/EVT 4 and NMU 3 performing software processing in accordance with a preset program. Alternatively, it is also possible to provide, within ECT/EVT 4 and NMU 3, a circuit (hardware) having a function corresponding to each functional block.

Referring to Fig. 7, ECT/EVT 4 includes an analog input unit 41, a multiplexer 42, A/D converter 43, a computing unit 44, a transmitting unit 45, and a sampling timing generating unit 46.

Analog input unit 41 converts a measured system electricity amount (analog data) into a level within a prescribed range that is easy for handling by an electronic circuit, and outputs the system electricity amount. Specifically, analog input unit 41 converts a current signal from the electric power system into a current signal within a prescribed range, and converts a voltage signal from the electric power system into a voltage signal within a prescribed range. Furthermore, by using a not-shown analog filter, analog input unit 41 removes an unnecessary frequency component (typically, a harmonic component) from the converted current signal and voltage signal.

In accordance with a prescribed order, multiplexer 42 sequentially selects one analog signal from a plurality of analog signals output from the aforementioned analog filter, and outputs the analog signal to A/D converter 43.

Computing unit 44 performs computation processing on the digital signal from A/D converter 43. Specifically, computing unit 24 performs processing such as gain adjustment and phase correction on the digital signal output from A/D converter 23, thereby generating digital data.

Sampling timing generating unit 46 receives an A/D conversion request signal from a timing synchronizing circuit 34 provided within NMU 3. In response to this A/D conversion request signal, sampling timing generating unit 46 generates a timing signal indicating a timing of sampling in A/D converter 43. A/D converter 43 performs A/D conversion in synchronization with the timing signal from sampling timing generating unit 46. As described above, the timing of A/D conversion in A/D converter 43 is controlled by the timing signal synchronized with the A/D conversion request signal output from NMU 3 in accordance with the synchronization signal from synchronization signal output device 5.

Transmitting unit 45 transmits the digital data generated by computing unit 44 to NMU 3.

NMU 3 includes a receiving unit 31, a computing unit 32, a transmitting and receiving unit 33, and timing synchronizing circuit 34.

When receiving the digital data from ECT/EVT 4, receiving unit 31 outputs this digital data to computing unit 32.

Computing unit 32 generates, from the digital data, digital data (AI data) that conforms to a protocol defined as process bus 6. As described above, serial data in which the measurement values are arranged in chronological order at every sampling cycle is used as the AI data.

Timing synchronizing circuit 34 controls a timing of computation in computing unit 32 in accordance with the synchronization signal from synchronization signal output device 5 (Fig. 1). Timing synchronizing circuit 34 further generates the A/D conversion request signal based on the synchronization signal, and transmits the generated A/D conversion request signal to A/D converter 43.

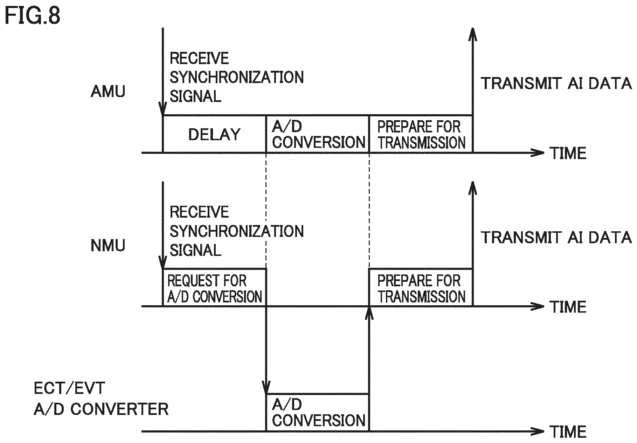

Correction of the timing of A/D conversion in AMU 2 will be described below with reference to Fig. 8.

Fig. 8 is a flowchart showing a process procedure for each of AMU 2, NMU 3 and ECT/EVT 4. As described above, each of AMU 2 and NMU 3 receives the synchronization signal output from synchronization signal output device 5 (Fig. 1). As described above, however, the timing of A/D conversion in A/D converter 43 provided within ECT/EVT 4 is controlled by the A/D conversion request signal output from NMU 3 in response to the synchronization signal from synchronization signal output device 5. In contrast, the timing of A/D conversion in AMU 2 is controlled by the synchronization signal from synchronization signal output device 5. Therefore, the timing of A/D conversion in NMU 3 is delayed with respect to the timing of A/D conversion in AMU 2.

Thus, AMU 2 delays the timing of A/D conversion, thereby matching the timing of A/D conversion in AMU 2 with the timing of A/D conversion in NMU 3. Specifically, timing synchronizing circuit 26 provided within AMU 2 sets an amount of correction of the timing of A/D conversion based on the phase correction data, and delays the timing of A/D conversion based on the set amount of correction.

As described above, according to the protection relay device of the second embodiment of the present invention, the AMU delays the timing of A/D conversion, and thereby, the AMU can compensate for the difference in timing of A/D conversion between the AMU and the NMU. As a result, the timing of collecting the system electricity amount in the AMU can be matched with the timing of collecting the system electricity amount in the NMU, and thus, the protection relay device can accurately perform processing such as protection, control and monitoring of the electric power system.

As described above, the protection relay device according to the present invention includes "correcting unit" for compensating for the difference in timing of A/D conversion between the AMU and the NMU (actually corresponding to the difference in timing of A/D conversion between the AMU and the ECT/EVT). In the aforementioned first and second embodiments, the IED or the AMU implements "correcting unit".

Third Embodiment

In the aforementioned first and second embodiments, description has been given to the configuration in which the IED or the AMU compensates for the difference in timing of A/D conversion based on the phase correction data input from outside the protection relay device. However, this phase correction data may be obtained inside the protection relay device. In a third embodiment, description will be given to a configuration in which the magnitude of the difference (amount of delay) in timing of A/D conversion is automatically measured.

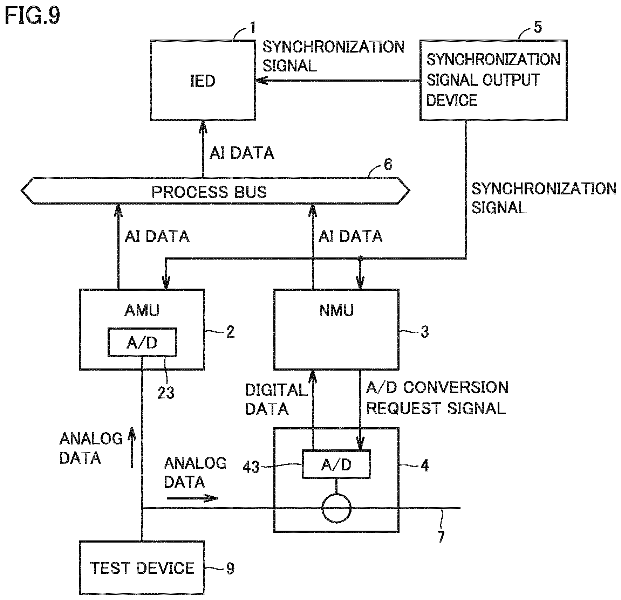

Fig. 9 is an overall configuration diagram of a protection relay device according to the third embodiment of the present invention. Since the overall configuration of the protection relay device according to the third embodiment of the present invention is similar to the configuration shown in Fig. 1 except for a function of automatically measuring an amount of delay in timing of A/D conversion, detailed description will not be repeated.

The protection relay device according to the third embodiment of the present invention is different from the protection relay device shown in Fig. 1 in that a test device 9 is further provided. Test device 9 generates analog data that imitates a system electricity amount, and inputs the generated analog data to AMU 2 and ECT/EVT 4. Namely, the analog data of the same phase is input to AMU 2 and ECT/EVT 4.

AMU 2 converts the analog data from test device 9 into digital data by using A/D converter 23. AMU 2 further performs processing such as gain adjustment and phase correction on the digital data output from A/D converter 23, thereby generating AI data. AMU 2 transmits the generated AI data to IED 1 via process bus 6.

When receiving the A/D conversion request signal from NMU 3, ECT/EVT 4 converts the analog data from test device 9 into digital data by using A/D converter 43, and outputs the digital data to NMU 3. NMU 3 performs processing such as gain adjustment and phase correction on the digital data output from ECT/EVT 4, thereby generating AI data. NMU 3 transmits the generated AI data to IED 1 via process bus 6.

When accepting the AI data via process bus 6, IED 1 divides the AI data into AMU data which is the AI data from AMU 2, and NMU data which is the AI data from NMU 3. Then, IED 1 compares the AMU data and the NMU data, thereby computing the amount of delay in timing of A/D conversion.

As described above, according to the protection relay device of the third embodiment of the present invention, the amount of delay in timing of A/D conversion can be automatically measured inside the protection relay device, and thus, the configuration for taking in the phase correction data from outside the device and holding the phase correction data becomes unnecessary. Accordingly, the configuration of the protection relay device can be simplified.

In addition, the amount of delay in timing of A/D is automatically measured when the protection relay device is placed and actually used in an electric power station such as a substation, and thus, the degree of accuracy of the amount of delay in timing of A/D conversion can be increased. Furthermore, the protection relay device is configured to automatically measure the amount of delay on a regular basis, and thus, the degree of accuracy of the amount of delay in timing of A/D conversion can be ensured.

Fourth Embodiment

In a fourth embodiment, description will be given to a configuration in which the function of automatically measuring the amount of delay in timing of A/D conversion described in the aforementioned third embodiment is applied to the protection relay device according to the first embodiment.

A protection relay device according to the fourth embodiment of the present invention is different from the protection relay device shown in Fig. 1 in that an IED 1A is provided instead of IED 1. Since the overall configuration of the protection relay device is the same as the configuration shown in Fig. 1 except for a control structure in IED 1A, detailed description will not be repeated.

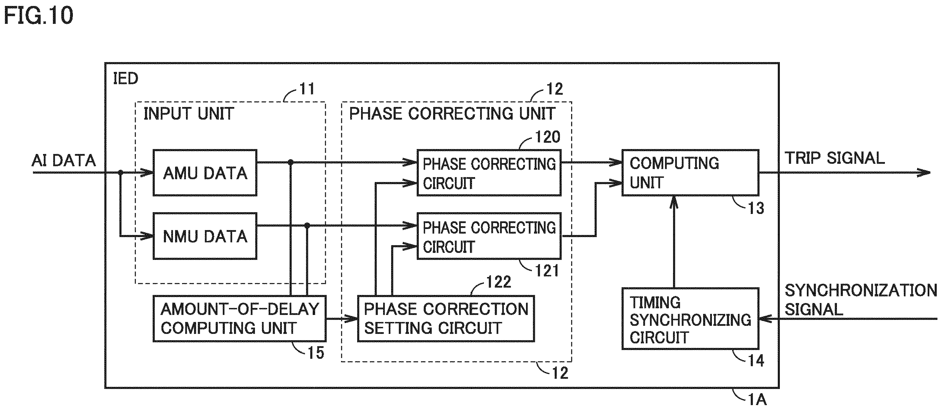

Fig. 10 is a functional block diagram of IED 1A in the protection relay device according to the fourth embodiment of the present invention. Each functional block shown in Fig. 10 is implemented by IED 1A performing software processing in accordance with a preset program. Alternatively, it is also possible to provide, within IED 1A, a circuit (hardware) having a function corresponding to each functional block.

Referring to Fig. 10, IED 1A includes input unit 11, phase correcting unit 12, computing unit 13, timing synchronizing circuit 14, and an amount-of-delay computing unit 15.

When accepting AI data via process bus 6, input unit 11 divides the AI data into AMU data which is the AI data from AMU 2, and NMU data which is the AI data from NMU 3.

Amount-of-delay computing unit 15 compares a phase of the AMU data and a phase of the NMU data, thereby computing an amount of delay in timing of A/D conversion. Amount-of-delay computing unit 15 outputs the calculated amount of delay to phase correction setting circuit 122 provided within phase correcting unit 12.

Phase correcting unit 12 corrects the phase of the AI data (the AMU data and the NMU data) by using the amount of delay input from amount-of-delay computing unit 15. Specifically, phase correction setting circuit 122 sets amount of correction T of the phase of the AMU data based on the calculated amount of delay. Phase correcting circuit 120 delays the phase of the AMU data based on amount of phase correction T set by phase correction setting circuit 122. On the other hand, phase correcting circuit 121 does not correct the phase of the NMU data and keeps the phase of the NMU data unchanged. As described above, phase correcting unit 12 matches the phase of the AMU data with the phase of the NMU data.

Computing unit 13 performs computation processing on the AMU data and NMU data subjected to correction. A timing of computation in computing unit 13 is controlled by timing synchronizing circuit 14. Computing unit 13 determines, at every prescribed cycle, whether or not a predetermined relay computation logic is satisfied. When the relay computation logic is satisfied, computing unit 13 outputs a trip signal to corresponding breaker 10 (Fig. 1).

As described above, according to the protection relay device of the fourth embodiment of the present invention, the IED delays the phase of the AMU data in accordance with the amount of delay in timing of A/D conversion automatically measured inside the protection relay device. As a result, the difference in timing of A/D conversion between the AMU and the NMU can be reliably compensated for with the simple device configuration.

Fifth Embodiment

In a fifth embodiment, description will be given to a configuration in which the function of automatically measuring the amount of delay in timing of A/D conversion described in the aforementioned third embodiment is applied to the protection relay device according to the second embodiment.

A protection relay device according to the fifth embodiment of the present invention is different from the protection relay device shown in Fig. 1 in that an IED 1B is provided instead of IED 1. Since the overall configuration of the protection relay device is the same as the configuration shown in Fig. 1 except for a control structure in IED 1B, detailed description will not be repeated.

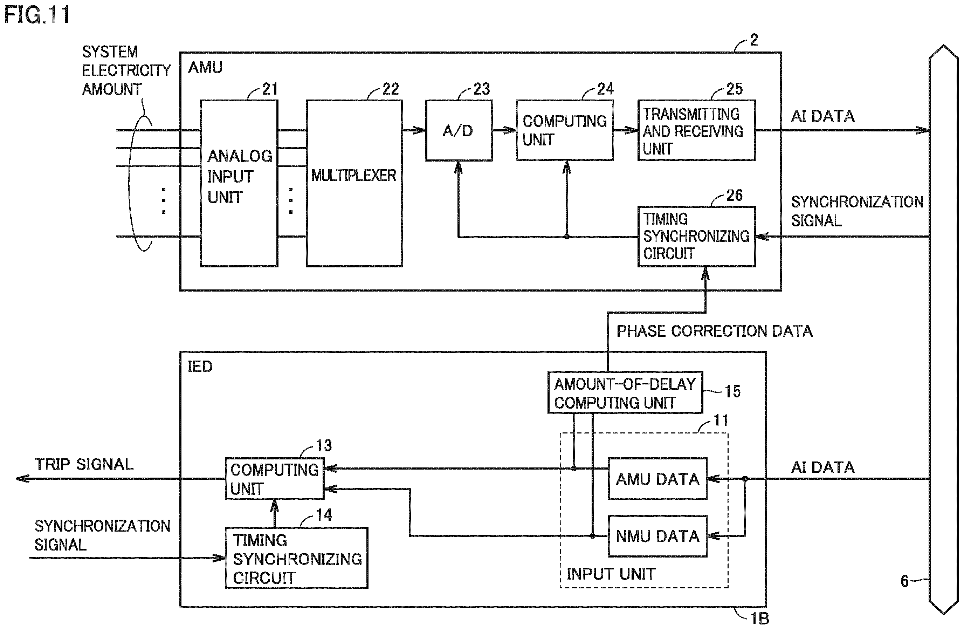

Fig. 11 is a functional block diagram of IED 1B and AMU 2 in the protection relay device according to the fifth embodiment. Each functional block shown in Fig. 11 is implemented by IED 1B and AMU 2 performing software processing in accordance with a preset program. Alternatively, it is also possible to provide, within IED 1B and AMU 2, a circuit (hardware) having a function corresponding to each functional block.

Referring to Fig. 11, IED 1B includes input unit 11, computing unit 13, timing synchronizing circuit 14, and amount-of-delay computing unit 15.

When accepting AI data via process bus 6, input unit 11 divides the AI data into AMU data which is the AI data from AMU 2, and NMU data which is the AI data from NMU 3.

Amount-of-delay computing unit 15 compares a phase of the AMU data and a phase of the NMU data, thereby computing an amount of delay in timing of A/D conversion. As described in the third embodiment, computation of the amount of delay is performed by using the dummy analog data input from test device 9 (Fig. 9) when the protection relay device is placed (or on a regular basis). Amount-of-delay computing unit 15 outputs the calculated amount of delay to timing synchronizing circuit 26 provided within AMU 2 as phase correction data.

In AMU 2, timing synchronizing circuit 26 controls a timing of sampling (timing of A/D conversion) in A/D converter 23 and a timing of computation in computing unit 24 in accordance with the synchronization signal from synchronization signal output device 5 (Fig. 1). Timing synchronizing circuit 26 further corrects the timing of A/D conversion in A/D converter 23 by using the phase correction data input from IED 1B. Specifically, timing synchronizing circuit 26 sets an amount of correction of the timing of A/D conversion based on the phase correction data, and delays the timing of A/D conversion in accordance with the set amount of correction. As described above, the timing of A/D conversion in AMU 2 is matched with the timing of A/D conversion in NMU 3, and thereby, the phases of the AMU data and the NMU data input to input unit 11 of IED 1B are matched with each other.

In IED 1B, computing unit 13 performs computation processing on the AMU data and the NMU data from input unit 11, thereby determining, at every prescribed cycle, whether or not a predetermined relay computation logic is satisfied. When the relay computation logic is satisfied, computing unit 13 outputs a trip signal to corresponding breaker 10 (Fig. 1).

As described above, according to the protection relay device of the fifth embodiment of the present invention, the AMU delays the timing of A/D conversion in accordance with the amount of delay in timing of A/D conversion automatically measured inside the protection relay device. As a result, the difference in timing of A/D conversion between the AMU and the NMU can be reliably compensated for with the simple device configuration.

In the first to fifth embodiments, as one example of the protection relay device, description has been given to the configuration of the protection relay device that includes the AMU and the NMU and can compensate for the difference in timing of A/D conversion between the AMU and the NMU. However, the application of the present invention is not limited to such protection relay device. Specifically, the present invention is also applicable to a protection relay device including a plurality of AMUs manufactured by different manufacturers or a protection relay device including a plurality of NMUs manufactured by different manufacturers, in order to compensate for a difference in timing of A/D conversion between the plurality of AMUs or a difference in timing of A/D conversion between the plurality of NMUs.

It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

REFERENCE SIGNS LIST

1, 1A, 1B IED; 2 AMU; 3 NMU; 4 ECT/EVT; 5 synchronization signal output device; 6 process bus; 7 power transmission line; 8 CT/VT; 9 test device; 10 breaker; 11 input unit; 12 phase correcting unit; 13, 24, 32, 44 computing unit; 14, 26, 34 timing synchronizing circuit; 15 amount-of-delay computing unit; 21, 41 analog input unit; 22, 42 multiplexer; 23, 43 A/D converter; 25, 33 transmitting and receiving unit; 31 receiving unit; 46 sampling timing generating unit; 45 transmitting unit.

**Claims**

1. A protection relay device, comprising:

   a plurality of merging units (2, 3) configured to collect information indicating a system electricity amount from an electric power system; and
   an intelligent electric device (1) configured to protect said electric power system based on the information from said plurality of merging units (2, 3), **characterised in that**
   said plurality of merging units (2, 3) include:

   a first merging unit (2) configured to receive first analog data indicating the system electricity amount from a first transformer (8), and to convert said first analog data into first digital data and output said first digital data to said intelligent electric device (1) in synchronization with a synchronization signal supplied from outside; and
   a second merging unit (3) configured to receive second digital data generated from second analog data indicating the system electricity amount from a second transformer (4), and to output said second digital data to said intelligent electric device (1),
   said second merging unit (3) is configured to receive said synchronization signal, generate a request signal for requesting analog/digital conversion, and output said request signal to said second transformer (4),
   said second transformer (4) is configured to convert the second analog data into the second digital data and output the second digital data to said second merging unit (3) in synchronization with said request signal from said second merging unit (3),
   the protection relay device further comprising
   a correcting unit (12) for configured to compensate for a phase difference in timing of analog/digital conversion between said first merging unit (2) and said second transformer (4) to thereby match the phase of the first digital data with the phase of the second digital data.

**2.** The protection relay device according to claim 1, wherein
said correcting unit (12) is provided in said intelligent electric device, and is configured to delay a phase of the first digital data input from said first merging unit (2) to said intelligent electric device in accordance with an amount of delay in a timing of analog/digital conversion in said second transformer (4) with respect to a timing of analog/digital conversion in said first merging unit (2).

**3.** The protection relay device according to claim 2, further comprising
a computing unit (13, 24, 32, 44) configured to compute said amount of delay in the timing of analog/digital conversion, wherein
said correcting unit (12) is configured to delay the phase of the first digital data input from said first merging unit (2) to said intelligent electric device in accordance with said amount of delay in the timing of analog/digital conversion from said computing unit (13, 24, 32, 44).

**4.** The protection relay device according to claim 1, wherein
said correcting unit (12) is provided in said first merging unit (2), and is configured to delay a timing of analog/digital conversion in said first merging unit (2) in accordance with an amount of delay in a timing of analog/digital conversion in said second transformer (4) with respect to the timing of analog/digital conversion in said first merging unit (2).

**5.** The protection relay device according to claim 4, further comprising
a computing unit (13, 24, 32, 44) configured to compute said amount of delay in the timing of analog/digital conversion, wherein
said correcting unit (12) is configured to delay the timing of analog/digital conversion in said first merging unit (2) in accordance with said amount of delay in the timing of analog/digital conversion from said computing unit (13, 24, 32, 44).

**6.** The protection relay device according to claim 3 or 5, further comprising
a test device (9) configured to input dummy analog data of the same phase to each of said first transformer and said second transformer, wherein
said computing unit (13, 24, 32, 44) is configured to compute said amount of delay in the timing of analog/digital conversion by comparing the first digital data input from said first merging unit (2) to said intelligent electric device in accordance with said dummy analog data and the second digital data input from said second merging unit (3) to said intelligent electric device in accordance with said dummy analog data.

**Patentansprüche**

**1.** Schutzrelaisvorrichtung, die Folgendes umfasst:

eine Vielzahl von Zusammenführungseinheiten (2, 3), die konfiguriert sind, um Informationen zu sammeln, die eine Systemelektrizitätsmenge von einem elektrischen Leistungsversorgungssystem angeben; und
eine intelligente elektrische Vorrichtung (1), die konfiguriert ist, um das elektrische Leistungsversorgungssystem auf Basis der Informationen von der Vielzahl von Zusammenführungseinheiten (2, 3) zu schützen, **dadurch gekennzeichnet, dass**
die Vielzahl von Zusammenführungseinheiten (2, 3) Folgendes umfasst:

eine erste Zusammenführungseinheit (2), die konfiguriert ist, um erste analoge Daten, die die Systemelektrizitätsmenge angeben, von einem ersten Wandler (8) zu empfangen, und diese ersten analogen Daten in erste digitale Daten umzuwandeln und in Synchronisation mit einem von außen gelieferten Synchronisationssignal die ersten digitalen Daten an die intelligente elektrische Vorrichtung (1) auszugeben; und
eine zweite Zusammenführungseinheit (3), die konfiguriert ist, um zweite digitale Daten, die aus zweiten analogen Daten erzeugt wurden, die die Systemelektrizitätsmenge angeben, von einem zweiten Wandler (4) zu empfangen, und diese zweiten digitalen Daten an die intelligente elektrische Vorrichtung (1) auszugeben,
wobei die zweite Zusammenführungseinheit (3) konfiguriert ist, um das Synchronisationssignal zu empfangen, ein Abfragesignal zum Abfragen einer Analog-/Digital-Wandlung zu erzeugen und das Abfragesignal an den zweiten Wandler (4) auszugeben,
wobei der zweite Wandler (4) konfiguriert ist, um die zweiten analogen Daten in die zweiten digitalen Daten umzuwandeln und die zweiten digitalen Daten in Synchronisation mit dem Abfragesignal von der zweiten Zusammenführungseinheit (3) an die zweite Zusammenführungseinheit (3) auszugeben,
wobei die Schutzrelaisvorrichtung ferner Folgendes umfasst:
eine Korrektureinheit (12), die konfiguriert ist, um eine Phasendifferenz in der Zeitgebung der Analog/Digital-Wandlung zwischen der ersten Zusammenführungseinheit (2) und dem zweiten Wandler (4) zu kompensieren, um so die Phase der ersten digitalen Daten mit der Phase der zweiten digitalen Daten in Übereinstimmung zu bringen.

2. Schutzrelaisvorrichtung nach Anspruch 1, wobei
die Korrektureinheit (12) in der intelligenten elektrischen Vorrichtung bereitgestellt ist und konfiguriert ist, um eine Phase der ersten digitalen Daten, die von der ersten Zusammenführungseinheit (2) an die intelligente elektrische Vorrichtung eingegeben werden, gemäß einem Verzögerungsausmaß in einer Zeitgebung der Analog/Digital-Wandlung in dem zweiten Wandler (4) mit Bezug auf eine Zeitgebung der Analog/Digital-Wandlung in der ersten Zusammenführungseinheit (2) zu verzögern.

3. Schutzrelaisvorrichtung nach Anspruch 2, die ferner Folgendes umfasst:

eine Recheneinheit (13, 24, 32, 44), die konfiguriert ist, um das Verzögerungsausmaß in der Zeitgebung der Analog/Digital-Wandlung zu berechnen, wobei
die Korrektureinheit (12) konfiguriert ist, um die Phase der ersten digitalen Daten, die von der ersten Zusammenführungseinheit (2) an die intelligente elektrische Vorrichtung eingegeben werden, gemäß dem Verzögerungsausmaß in der Zeitgebung der Analog/DigitalWandlung von der Recheneinheit (13, 24, 32, 44) zu verzögern.

4. Schutzrelaisvorrichtung nach Anspruch 1, wobei
die Korrektureinheit (12) in der ersten Zusammenführungseinheit (2) bereitgestellt ist und konfiguriert ist, um eine Zeitgebung der Analog/Digital-Wandlung in der ersten Zusammenführungseinheit (2) gemäß einem Verzögerungsausmaß in der Zeitgebung der Analog/Digital-Wandlung im zweiten Wandler (4) mit Bezug auf die Zeitgebung der Analog/Digital-Wandlung in der ersten Zusammenführungseinheit (2) zu verzögern.

5. Schutzrelaisvorrichtung nach Anspruch 4, die ferner Folgendes umfasst:

eine Recheneinheit (13, 24, 32, 44), die konfiguriert ist, um das Verzögerungsausmaß in der Zeitgebung der Analog/Digital-Wandlung zu berechnen, wobei
die Korrektureinheit (12) konfiguriert ist, die Zeitgebung der Analog/Digital-Wandlung in der ersten Zusammenführungseinheit (2) gemäß dem Verzögerungsausmaß in der Zeitgebung der Analog/Digital-Wandlung von der Recheneinheit (13, 24, 32, 44) zu verzögern.

6. Schutzrelaisvorrichtung nach Anspruch 3 oder 5, die ferner Folgendes umfasst:

eine Testvorrichtung (9), die konfiguriert ist, um analoge Leerdaten derselben Phase sowohl an den ersten Wandler als auch an den zweiten Wandler einzugeben, wobei
die Recheneinheit (13, 24, 32, 44) konfiguriert ist, um das Verzögerungsausmaß in der Zeitgebung der Analog/Digital-Wandlung zu berechnen, indem die ersten digitalen Daten, die von der ersten Zusammenführungseinheit (2) an die intelligente elektrische Vorrichtung gemäß den analogen Leerdaten eingegeben werden, mit den zweiten digitalen Daten, die von der zweiten Zusammenführungseinheit (3) an die intelligente elektrische Vorrichtung gemäß den analogen Leerdaten eingegeben werden, verglichen werden.

**Revendications**

1. Dispositif de relais à protection comprenant :

une pluralité d'unités de fusion (2, 3) configurées pour collecter des informations indiquant une quantité d'électricité système provenant d'un système d'alimentation électrique ; et
un dispositif électrique intelligent (1) configuré pour protéger ledit système d'alimentation électrique sur la base des informations provenant de ladite pluralité d'unités de fusion (2, 3), **caractérisé en ce que**
ladite pluralité d'unités de fusion (2, 3) comprennent :

une première unité de fusion (2) configurée pour recevoir des premières données analogiques indiquant la quantité d'électricité système provenant d'un premier transformateur (8), et pour convertir lesdites premières données analogiques en premières données numériques et délivrer en sortie lesdites premières données numériques dans ledit dispositif électrique intelligent (1) en synchronisation avec un signal de synchronisation envoyé de l'extérieur ; et

une seconde unité de fusion (3) configurée pour recevoir des secondes données numériques générées à partir de secondes données analogiques indiquant la quantité d'électricité système provenant d'un second transformateur (4), et pour délivrer en sortie lesdites secondes données numériques dans ledit dispositif électrique intelligent (1),

ladite seconde unité de fusion (3) est configurée pour recevoir ledit signal de synchronisation, générer un signal de requête pour demander une conversion analogique/numérique, et délivrer en sortie ledit signal de requête dans ledit second transformateur (4),

ledit second transformateur (4) est configuré pour convertir les secondes données analogiques en secondes données numériques et pour délivrer en sortie les secondes données numériques dans ladite seconde unité de fusion (3) en synchronisation avec ledit signal de requête provenant de ladite seconde unité de fusion (3),

le dispositif de relais à protection comprenant en outre

une unité de correction (12) configurée pour compenser une différence de phase dans le cadencement de conversion analogique/numérique entre ladite première unité de fusion (2) et ledit second transformateur (4) afin de faire correspondre de la sorte la phase des premières données numériques et la phase des secondes données numériques.

2.  Dispositif de relais à protection selon la revendication 1, dans lequel
    ladite unité de correction (12) est disposée dans ledit dispositif électrique intelligent, et est configurée pour retarder une phase des premières données numériques entrées depuis ladite première unité de fusion (2) dans ledit dispositif électrique intelligent conformément à une quantité de retard dans un cadencement de conversion analogique/numérique dans ledit second transformateur (4) par rapport à un cadencement de conversion analogique/numérique dans ladite première unité de fusion (2) .

3.  Dispositif de relais à protection selon la revendication 2, comprenant en outre
    une unité de calcul (13, 24, 32, 44) configurée pour calculer ladite quantité de retard dans le cadencement de conversion analogique/numérique, dans lequel
    ladite unité de correction (12) est configurée pour retarder la phase des premières données numériques entrées depuis ladite première unité de fusion (2) dans ledit dispositif électrique intelligent conformément à ladite quantité de retard dans le cadencement de conversion analogique/numérique par rapport à ladite unité de calcul (13, 24, 32, 44).

4.  Dispositif de relais à protection selon la revendication 1, dans lequel
    ladite unité de correction (12) est disposée dans ladite première unité de fusion (2), et est configurée pour retarder un cadencement de conversion analogique/numérique dans ladite première unité de fusion (2) conformément à une quantité de retard dans un cadencement de conversion analogique/numérique dans ledit second transformateur (4) par rapport au cadencement de conversion analogique/numérique dans ladite première unité de fusion (2) .

5.  Dispositif de relais à protection selon la revendication 4, comprenant en outre
    une unité de calcul (13, 24, 32, 44) configurée pour calculer ladite quantité de retard dans le cadencement de conversion analogique/numérique, dans lequel
    ladite unité de correction (12) est configurée pour retarder le cadencement de conversion analogique/numérique dans ladite première unité de fusion (2) conformément à ladite quantité de retard dans le cadencement de conversion analogique/numérique par rapport à ladite unité de calcul (13, 24, 32, 44).

6.  Dispositif de relais à protection selon la revendication 3 ou 5, comprenant en outre
    un dispositif de test (9) configuré pour entrer des données analogiques factices ayant la même phase que chacun dudit premier transformateur et dudit second transformateur, dans lequel
    ladite unité de calcul (13, 24, 32, 44) est configurée pour calculer ladite quantité de retard dans le cadencement de conversion analogique/numérique en comparant les premières données numériques entrées depuis ladite première unité de fusion (2) dans ledit dispositif électrique intelligent conformément auxdites données analogiques factices et les secondes données numériques entrées depuis ladite seconde unité de fusion (3) dans ledit dispositif électrique intelligent conformément auxdites données analogiques factices.

# FIG.1

FIG.2

SYSTEM ELECTRICITY AMOUNT

AMU

TIMING OF
A/D CONVERSION

SYSTEM
ELECTRICITY AMOUNT

NMU

TIMING OF
A/D CONVERSION

T0

DELAY IN TIMING
OF A/D CONVERSION

SAMPLING TIME

# FIG.3

EP 3 018 782 B1

FIG.4

DELAY PHASE

a#(t)

a(t)

AMU

T

n(t)

TIMING OF
COMPUTATION

NMU

T0

TIMING OF
COMPUTATION

SAMPLING TIME

18

# FIG.5

## FIG.6

FIG.7

FIG.8

FIG.9

IED — 1

SYNCHRONIZATION SIGNAL

SYNCHRONIZATION SIGNAL OUTPUT DEVICE — 5

AI DATA

PROCESS BUS — 6

SYNCHRONIZATION SIGNAL

AI DATA

AI DATA

AMU

A/D — 2

23

NMU — 3

DIGITAL DATA

A/D CONVERSION REQUEST SIGNAL

ANALOG DATA

ANALOG DATA

43 — A/D — 4

7

TEST DEVICE — 9

FIG.10

# FIG.11

SYSTEM ELECTRICITY AMOUNT

**AMU** — 2

ANALOG INPUT UNIT — 21

MULTIPLEXER — 22

A/D — 23

COMPUTING UNIT — 24

TRANSMITTING AND RECEIVING UNIT — 25

AI DATA

SYNCHRONIZATION SIGNAL

TIMING SYNCHRONIZING CIRCUIT — 26

PHASE CORRECTION DATA

**IED**

AMOUNT-OF-DELAY COMPUTING UNIT — 15

11

TRIP SIGNAL

COMPUTING UNIT — 13

AMU DATA

AI DATA

SYNCHRONIZATION SIGNAL

TIMING SYNCHRONIZING CIRCUIT — 14

NMU DATA

INPUT UNIT

1B

6

EP 3 018 782 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002315233 A
- WO 2010118550 A1
- US 2010153036 A1
- EP 2503667 A1
- JP H05188105 A